# EUROPEAN PATENT SPECIFICATION

(11) **EP 2 368 834 B1**
(45) Date of publication and mention of the grant of the patent: **31.07.2013**
(21) Application number: 11157286.3
(22) Date of filing: 08.03.2011
(51) Int. Cl.: B66C 23/20, B66F 19/00, F03D 1/00, F03D 11/04

(54) **Equipment for raising/lowering of wind generator turbines**
Heb- und Senkausrüstung für Windgeneratorturbinen
Équipement pour soulèvement/abaissement automatique de turbines d'éoliennes

(30) Priority: 22.03.2010 ES 201000371
(43) Date of publication of application: 28.09.2011
(73) Proprietor: FCC Construccion, S.A, 28045 Madrid (ES); BBR Pretensados y Técnicas Especiales, S.L, 28045 Madrid (ES)
(72) Inventor: Hernández Britz , Jesus Javier Mateos, 28045, MADRID (ES); Tejada Ximénez de Olaso, Fernando, 28045, MADRID (ES)
(74) Representative: Isern-Jara, Nuria

(56) References cited:
- EP-A2- 1 057 770
- JP-A- 2006 207 502
- US-A- 4 311 434
- US-A1- 2002 171 247

## Description

### Object of the invention

The present invention refers to a device for raising lowering wind generator turbines, that contributes essential characteristics of novelty and appreciable advantages compared to the systems and devices used for the same purposes in the current state of the art.

In particular, the object of the invention relates to an equipment conceived and designed for the raising/lowering of heavy loads, which for example may be the wind generator turbines, onto towers made of concrete, steel, reinforced polymer or any combination of these materials, provided for this purpose, with a self propelling mechanism, by means of hydraulic jacks of the type known as 'heavy raising' in the technique, which work on steel wires fixed to the top of stated towers.

The field of application of the invention is clearly to be found in the industrial sector involved in the manufacture and installation of equipment for raising heavy loads.

### Background and Summary of the Invention

Those skills in the matter are aware of the fact that it is necessary to use large cranes, in places that are normally difficult to access for the installation of wind generation equipment.

These installation systems are still more difficult to apply, as the current development of wind generation equipment is continually becoming more powerful, forcing the installation in towers with heights that are becoming progressively greater and in locations that have increased orographic difficulty, seeking greater availability of effective wind hours, greater available wind speeds and therefore greater efficiency in the advantages of the energy supplied by said equipment.

JP 2006 207502 disclous a raining/lowering equipment for wind generator tubines according to the preamble of claim 1.

The present invention has proposed the main object as the fact of offering an effective alternative to the use of the traditional systems for the raising of the wind generation equipment or other heavy loads by means of large sized cranes, not always possible because of the greater height necessary for the wind generator support towers and because of the locations in the zones with increasing access difficulties, and for this reason the raising equipment has been designed which is going to be the object of the description that follows. Likewise, the invention solves the ultimate dismantling and lowering of the equipment in the event of replacement or dismantling.

According to the invention, the object put forward has been resolved by means of the already known raising/lowering equipment, basically consisting of a platform onto which the turbine to be lifted is placed, carried out from a metallic structure designed and sized to transfer the total load of the assembly to some guide elements which by means of some sliding systems suitable for each case, fix the assembly to some guide profiles that have been previously installed in the tower that is made of concrete or some other material, in such a way that the movement of the equipment along the generating function of the tower is guaranteed. The guide elements of the platform have some safety blocking mechanisms that are used to immobilise the stated platform at any moment of the raising for any eventuality that may be required.

The propulsion system for the turbine-platform support structure assembly by preference consists of two heavy lifting hydraulic jacks, placed under the support structure, which work on steel wires fixed into the top of the tower, in such a way that, when the jack opens up it gathers up its cylinder anchored on the wire, with this movement pulling the assembly and bringing about the raising / lowering.

Likewise, the wind generator support platform is prepared to support a frame on which the turbine is fixed during the raising / lowering operation, and which, activated by another set of hydraulic jacks, allows horizontal movements in respect of both axes during the positioning operations. It also has another hydraulic jack assembly fitted in a vertical position, which enables the final adjustment of the height of the equipment, allowing the frame to have the ability to carry out small vertical movements.

The equipment of the invention also solves the installation/dismantling operation of the wind generator turbine blades, for which purpose it is prepared so it can make a stop in an intermediate position along its raising/lowering path, once having attained the height necessary to allow the wind generator turbine blades to be housed and connected/disconnected to and from the turbine housed and connected/disconnected to and from the turbine rotor in the vertical position and under the axis of same, it has a mechanical fixing for the structure in said position. The blade installation/dismantling operation can also be made once the wind turbine has reached a position corresponding to the top height, continuing in a similar manner to that stated for the operation in the intermediate position.

Two metal sliding arms and in a lateral position, on both sides and equidistant from the rotor axis, have been provided for the raising/lowering of the blades, in such a way that they can be gathered in so that they do not interface with the movement of the blades, with the use of suitable raising systems in line with the weight and the geometry of the blades to be assembled/dismantled (hoists, winches or hydraulic jacks) which hold each blade for connection/dismantling to and from the turbine rotor.

If the installation of the blades is carried out at an intermediate height, the mechanical blocking mechanism can be removed from the structure once the installation/dismantling operation of the entirety of the blades has been finished, in such a way that it can continue along the upward/downward path of the assembly.

Once the platform is in the top point position of the tower, suitable horizontal guides are deployed that allow the stated support to slide along, with the wind generator turbine equipment on the latter for the purpose of locating it on the vertical of its final position, from where it is made to lower using the hydraulic jacks provided for that purpose on the frame, in order to carry out the final anchoring of the wind powered generator in its operating position.

The hydraulic units that activate the hydraulics jack equipment that have been described above are housed in the structure of the platform support, being underneath it, in such a way that by means of the use of a remote control system, it allows the self-propelled activation of the equipment object of the invention from the ground level and under safe working conditions for the technicians in charge of the raising/lowering operation.

### Brief description of the Drawings

These and other characteristics and advantages of the invention will be shown more clearly from a detailed description that follows of a preferred embodiment of same, given solely by way of being illustrative and not by way of limitation, with reference to the diagrammatic drawings that are attached, in which:
Figure 1 shows several diagrammatic views (a-d) of the equipment of the invention with the raising/lowering system at different heights compared to the initial and intermediate positions for the installation/dismantling of the blades and the final position, with the turbine of the generator positioned on the support frame, some details are also shown in the figure in larger scale;
Figure 2 (a-3) shows a graphical diagrammatic representation of the operating sequence of the turbine installation on the support tower with the equipment positioned at the top point of the tower and with the guides for horizontal movement of the frame unfolded in their working position, and
Figure 3 shows a diagrammatic view, in perspective of the equipment from above in the position shown in figure 2.

### Description of a Preferred Embodiment

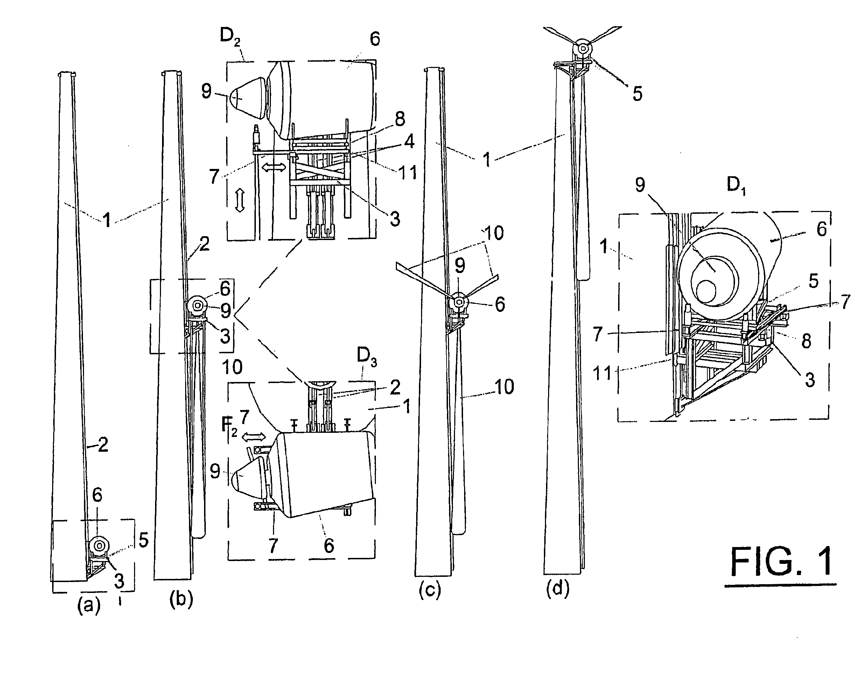

As and how mentioned above, the detailed description of a preferred embodiment of the object of the invention is going to be made in the following with the help of the annexed drawings, by means of which, the same numerical references are used to refer to equal or similar parts. Along these lines, in the first place paying attention to the representations shown in figures 1a to 1d, a piece of equipment conceived in line with the invention can be seen in side elevation view, prepared for the installation of a wind turbine generator on the top of a support tower 1. In figure 1a, the equipment is located at the lowest position, where the components shown in detail D1 can be appreciated more clearly, shown in larger scale, and the load raising/lowering equipment (a wind generator turbine in this specific case, as described above) is fixed to installation positioning guides 2 vertical guaranteeing a generating function of the support tower 1, together with the tower 1 and extended to the height of the latter. The equipment comprises a strong platform 3, capable of moving along said installation guides 2 in a self-propelled manner, for example brought about by the action of heavy lifting type jacks that can be seen in the elevation view of the detail D2 and marked with the reference number 4, this platform 3 also having some mechanical blocking means 11 for stopping and holding the platform at the required height. Detail D3 shows an upper plan view that in a like manner shows the connection between platform 3 and the installation guides 2 secured to the column 1.

A frame 5 on the platform 3, anchored to the platform, which is so as to support a turbine 6 or any other load during the raising / lowering operations and which is fitted with means for the vertical and horizontal movement of said turbine 6 so as to enable the correct positioning of same at the installation site, said means having both horizontal and vertical movement, by preference with hydraulic jacks positioned on the side arms 7 of the frame 5.

According to the above, figures 1a to 1d explain the sequence in regard to the raising operation (or inversely, lowering) of a turbine 6 from a lower position (figure 1a) up to an upper position (figure 1d) along the length of a tower 1, including the stopping in intermediate positions, in this way it is planned for the final assembly of the rotor 9 blades 10 of a wind generator turbine 6. The sequence is as follows:

In the representation that is shown in figure 1a, the platform assembly 3, frame 5 and the turbine 6, previously connected in a sliding manner to the installation guides 2 by means of platform 3, has a lower position (detail D1 shows an initial situation in greater size). From here, once the turbine has been fixed and is safe on the equipment, the raising operation is commenced by means of remotely activating the impulsion means, which in this case are made up of heavy lifting types of jacks 4. Where appropriate, if the installation of the blades 10 for the wind generator turbine 6 in an intermediate position of the upward run has been planned as shown in figure 1b, the stopping of the equipment in such a position is determined, leaving the assembly anchored at the corresponding height with the help of the blocking means 11 incorporated in the connection of the platform 3 to the installation guides 2. By using appropriate raising means (not shown), installed in the side arms 7 of the frame 5.

Once the installation of all of the wind generator turbine 6 rotor 9 blades 10 is finished, as and how shown in figure 1e, the blocking mechanisms are deactivated and the upward transfer movement of the equipment is restarted up to the upper top position as shown in figure 1d, at which position the assembly is once again anchored with the use of the blocking mechanisms 11.

As an alternative, the turbine 6 blades 10 can be installed on the rotor 9 once this upper position is reached instead of at the intermediate position shown in figures 1b - 1c, the operations being exactly the same as have been previously described.

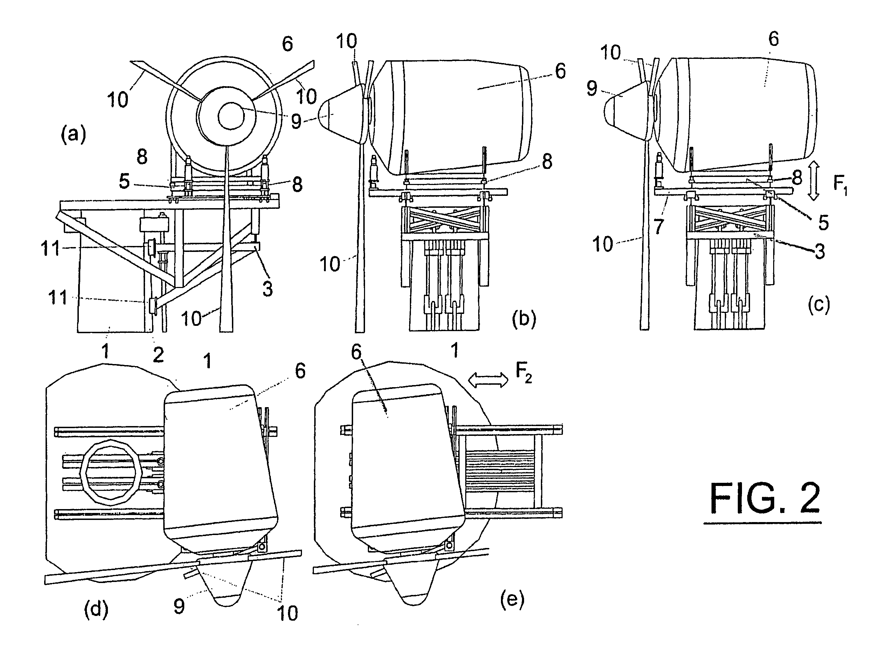

In whichever case, once having reached the upper position as shown in figure 1d and with the blades 10 fixed to the turbine 6 rotor 9 regardless of where the assembly of the blades to the assembly has been carried out, it is ready to transfer said turbine 6 to its position on the top of the support tower 1. This transfer operation is represented in the sequence of figure 2 where several views (a-e) are shown in a front and side elevation view as well as an upper plan view of the turbine 6 fixed to the frame 5, and this in turn supported by the platform 3.

The blocking of platform 3 to the installation guides 2, acts on the set of the raising/lowering and transfer hydraulic jacks 8.

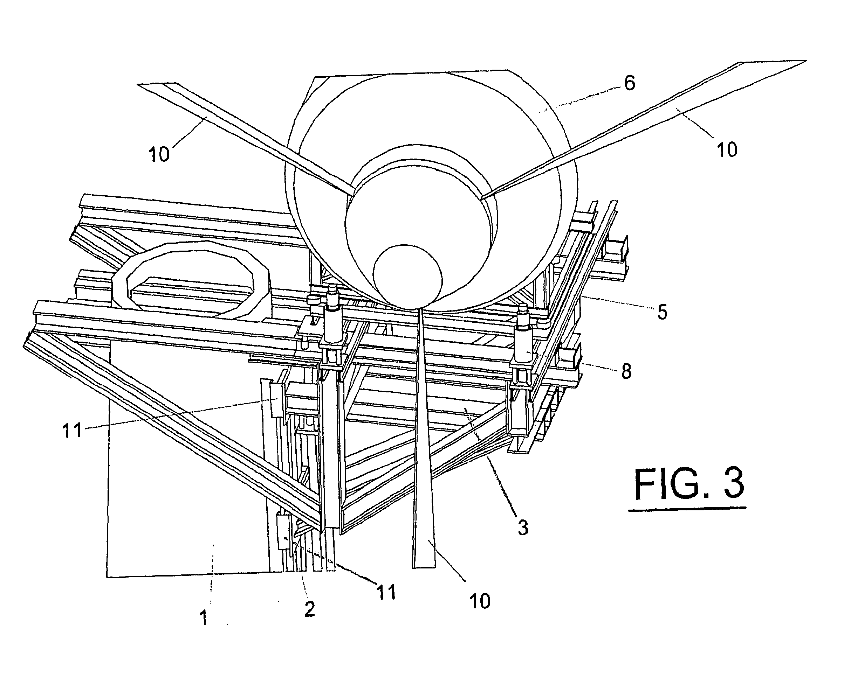

By doing this, as and how shown by means of arrow F₁ of figure 2c, the upward or downward movement is brought about, whichever is appropriate, of the frame cradle that holds turbine 6, with this leaving it ready to be moved horizontally (figure 1d), using other hydraulic jacks fitted in the frame, onto its position on the support tower 1. The representation that appears in figure 1e allows one to see how the frame 5 with the turbine 6 fixed to same has been moved, as shown by the arrow F₂, up to its position on the tower 1, in this way leaving it ready to be anchored in its operating position. Figure 3 shows a view in a larger scale and with greater detail of the equipment of the invention located in the upper position of figure 1d, in which it can be seen the deployment of the guides of the platform, the hydraulic jacks of the frame used for the raising and lowering operations, and the final involvement of the blades 10 with the structure and the concrete tower during the horizontal positioning movement of the wind generator turbine 6 on the vertical of the support tower 1 axis.

In that which is stated above an explanation has been made of the equipment disclosed by the present invention, mainly focused on the raising and hoisting of a wind generator turbine 6 for its positioning on the top of a vertical tower that has been especially designed and built for such an application. However, the experts in the matter will understand that, in accordance to that alluded to in certain parts of the explanation, the equipment becomes just as suitable for its application and the opposite, this meaning, the downward or lowering movement of the turbine from the top of the tower down to the lower position which has been described as the starting point of the explanation, and is shown in figure 1a. The operations are exactly the same, but are carried out in reverse order. In a like manner, it must be understood that even though the explanation has been considered by way of an example, a practical case of hoisting of a wind generator turbine up to the top of a vertical support tower of greater height than normal, the equipment of the invention can be used with any other type of load.

It is not considered necessary to make the content of this description more extensive as any expert in the matter can understand the scope of the invention and the advantages that are provided by the same.

In spite of the above, and given that the description carried out corresponds solely with an example of a preferred embodiment, it will be understood that different modifications and variations can be introduced, which will be able to affect the shapes, sizes and materials of the manufacture of the assembly or of its parts or any others that do not divert from the scope of the claims that follow.

## Claims

1. Equipment for raising/lowering of wind generator turbines, in particular for the raising / lowering of a wind generator turbine (6) or other heavy loads to/from the top of a variable height support tower (1) constructed from concrete, steel, reinforced polymers or any combination of these materials for the purposes of installation of said turbine on towers located in areas with restricted accessibility, comprising a strong platform (3) associated to installation guides (2) fixed to said support tower (1) and with the ability to move along said guides, being provided with blocking mechanisms (11) for blocking at any chosen position; a frame (5) fitted on the stated platform (3) and provided so as to support the turbine (6) during the upward/downward movements and raising and horizontal sliding means of said frame (5) during the installation/dismantling operations of the turbine (6) at the working position on the top of the support tower (1) wherein the platform (3) includes sliding guides for the horizontal movement of the frame (5) supporting the turbine (6) above the top of the tower (1), along both axes, during its movement outwards from the stated platform (3) so as to enable the placement of the turbine (6) on the vertical of the axis of said support tower (1),
wherein the raising/lowering means of the equipment along the installation guides (2) consists of remote controlled "heavy lifting" type of hydraulic jacks (4) placed under the support structure, which work on steel wires anchored to the top of the stated towers, in such a way that, when the jack opens up it gathers up its cylinder anchored on the steel wires, with this movement pulling the assembly and bringing about the raising/lowering, wherein the raising and horizontal sliding means of the frame (5) consists preferably of hydraulic jacks (8) installed in the sides (7) of said frame (5).

2. Equipment for raising/lowering of wind generator turbines, according to claim 1,
**characterised in that** the platform (3) additionally includes raising/lowering means of the wind generator turbine (6) blades (10), for the connection/disconnection of said blades to the turbine rotor (9) at a previously chosen height position, being located said raising/lowering means on both sides of the platform and being equidistant from the rotor (9) axis.

3. Equipment for raising/lowering of wind generator turbines, according to the preceding claims, **characterised by** additionally comprising hydraulic units for driving the hydraulic jack assembly, housed in the platform (3) support structure, underneath it, and capable of self propelled drive from a remote position.

## Patentansprüche

1. Vorrichtung mit Eigenantrieb zum Heben/Senken von Windgenerator-Turbinen, insbesondere zum Heben/Senken einer Windgenerator-Turbine (6) oder anderer schwerer Lasten zur/von der Spitze eines Turms mit variabler Höhe (1) aus Beton, Stahl, verstärkten Polymeren oder einer beliebigen Kombination dieser Materialien, zum Zwecke der Anbringung dieser Turbine an Türmen, die in Gebieten mit eingeschränkter Zugänglichkeit liegen, bestehend aus einer mit an diesem Turm (1) befestigten Montageschienen (2) verbundenen und entlang derselben verschiebbaren, stabilen Plattform (3), die mit Blockiervorrichtungen (11) zum Blockieren in jeder gewählten Position ausgestattet ist; einem auf dieser Plattform (3) angebrachten Rahmen (5), der zum Halten der Turbine (6) während der Aufwärts/Abwärtsbewegungen vorgesehen ist, und Mitteln zum Heben und horizontalen Verschieben dieses Rahmens (5) während der Montage/Demontage der Turbine (6) in der Arbeitsposition an der Spitze des Turms (1), wobei die Plattform (3) Gleitschienen zum horizontalen Verschieben des Rahmens (5) entlang beider Achsen aufweist, um die Turbine (6) während der Verschiebung außerhalb der genannten Plattform (3) oberhalb der Spitze des Turms (1) zu halten, so dass die Platzierung der Turbine (6) in der Vertikalen der Achse des genannten Turms (1) ermöglicht wird, wobei die Mittel zum Heben/Senken der Einrichtung entlang der Montageschienen (2) aus unterhalb der Trägerstruktur angeordneten, ferngesteuerten Hydraulikzylindern (4) der Art schwerer Lasten bestehen, die mit an der Spitze der genannten Türme verankerten Stahlseilen derart arbeiten, dass bei Öffnen des Zylinders die in seinen Stahlseilen verankerte Rolle eingeholt wird und mit dieser Bewegung ein Zug auf die Einheit ausgeübt und damit die Aufwärts-/Abwärtsbewegung bewirkt wird, wobei die Mittel zum Heben und horizontalen Verschieben des Rahmens (5) bevorzugt aus an den Seiten (7) dieses Rahmens (5) angebrachten Hydraulikzylindern (8) bestehen.

2. Vorrichtung mit Eigenantrieb zum Heben/Senken von Windgenerator-Turbinen nach Anspruch 1, **dadurch gekennzeichnet, dass** die Plattform (3) zusätzlich Mittel zum Heben/Senken der Schaufeln (10) der Windgenerator-Turbine (6) umfasst, um die genannten Schaufeln in einer zuvor gewählten Höhenlage am Rotor (9) der Turbine anzubringen/abzunehmen, wobei die genannten Mittel zum Heben/Senken an beiden Seiten der Plattform mit dem gleichen Abstand zur Rotorachse (9) angeordnet sind.

3. Vorrichtung mit Eigenantrieb zum Heben/Senken von Windgenerator-Turbinen nach den vorhergehenden Ansprüche, **dadurch gekennzeichnet, dass** sie zusätzlich Hydraulikeinheiten zum Antrieb der Hydraulikzylindergruppe umfasst, die in der Trägerstruktur der Plattform (3) unterhalb derselben untergebracht und aus einer entfernten Position zum Selbstantrieb fähig sind.

## Revendications

1. Dispositif autopropulseur servant à monter/descendre des générateurs d'éoliennes, notamment à monter/descendre un générateur d'éolienne (6) ou d'autres charges lourdes vers/depuis la partie supérieure d'un mât de hauteur variable (1) construit à base de béton, d'acier, de polymères renforcés ou de toute association de ces matériaux, dans le but d'installer ce générateur sur des mâts situés dans des zones à accès restreint, comprenant une plateforme résistante (3) associée à des guides d'installation (2) fixés audit mât (1) et avec une capacité de déplacement le long desdits guides, disposant de mécanismes de blocage (11) pour le blocage quelque soit la position choisie ; une armature (5) montée sur ladite plateforme (3) et placée de manière à supporter le générateur (6) lors des mouvements effectués vers le haut/bas et des moyens de levage et de glissement horizontal de ladite armature (5) au cours des opérations de montage/démontage du générateur (6) dans la position de travail sur la partie supérieure du mât (1), où la plateforme (3) comprend des guides de glissement pour le mouvement horizontal de l'armature (5) qui supporte l'éolienne (6) au-dessus de la partie supérieure du mât (1) le long des deux axes, pendant son déplacement vers l'extérieur depuis ladite plateforme (3) afin de permettre la mis en place du générateur (6) sur la verticale de l'axe dudit mât (1),
où les moyens permettant de monter/descendre l'équipement le long des guides d'installation (2) consistent en des vérins hydrauliques (4) de type « élévateur lourd » à commande à distance, situés sous la structure de support, qui travaillent sur des câbles en acier ancrés dans la partie supérieure des mâts mentionnés, de telle manière que lorsque le vérin s'ouvre, il ramène son cylindre ancré dans les câbles en acier, ce mouvement effectuant une traction sur l'ensemble et provoquant la montée/descente, où les moyens de levage et de glissement horizontal de l'armature (5) sont de préférence des vérins hydrauliques (8) installés sur les côtés (7) de ladite armature (5).

2. Dispositif autopropulsé servant à monter/descendre des générateurs d'éoliennes, selon la revendication 1, **caractérisé en ce que** la plateforme (3) comprend en plus des moyens de montée descente des pales (10) du générateur d'éolienne (6) pour le branchement/débranchement desdites pales au rotor (9) de l'éolienne dans une position de hauteur préalablement choisie, lesdits moyens de montée/descente étant situés des deux côtés de la plateforme et à une distance égale de l'axe du rotor (9).

3. Dispositif autopropulsé servant à monter/descendre des générateurs d'éoliennes, selon les revendications précédentes, **caractérisé en ce qu'**il comprend en plus des unités hydrauliques permettant de pousser l'ensemble des vérins hydrauliques logés dans la structure de support de la plateforme (3) sous celle-ci et capables d'exercer une impulsion autopropulsée à partir d'une position éloignée.
